# EUROPEAN PATENT APPLICATION

(11) **EP 4 488 660 A1**
(43) Date of publication of application: **08.01.2025**
(21) Application number: 24184855.5
(22) Date of filing: 27.06.2024
(51) Int. Cl.: G01N 21/3563, G01N 21/71

(54) **ANALYSIS METHOD AND COMPOSITE ANALYSIS APPARATUS**

(30) Priority: 07.07.2023 JP 2023112272
(71) Applicant: Shimadzu Corporation, Nakagyo-ku, Kyoto-shi, Kyoto 604-8511 (JP)
(72) Inventor: ARAKI, Takahisa, Kyoto-shi, Kyoto, 604-8511 (JP); FUJI, Risa, Kyoto-shi, Kyoto, 604-8511 (JP)
(74) Representative: Müller-Boré & Partner Patentanwälte PartG mbB

(57) **Abstract**

An analysis method is performed in a composite analysis apparatus (100) in which infrared spectroscopic analysis by infrared spectroscopy and LIBS analysis by laser-induced breakdown spectroscopy can be performed on a sample (S). The analysis method includes conducting infrared spectroscopic analysis by irradiating the sample (S) with infrared rays (ST02 to ST06), conducting LIBS analysis by irradiating the sample (S) with laser beams (ST08 to ST12), and identifying a component in the sample (S) based on first analysis data obtained by infrared spectroscopic analysis and second analysis data obtained by LIBS analysis (ST14). The conducting infrared spectroscopic analysis (ST02 to ST06) is performed before the conducting LIBS analysis (ST08 to ST12).

## Description

### CROSS REFERENCE TO RELATED APPLICATIONS

This nonprovisional application is based on Japanese Patent Application No. 2023-112272 filed with the Japan Patent Office on July 7, 2023, the entire contents of which are hereby incorporated by reference.

### BACKGROUND OF THE INVENTION

### Field of the Invention

The present disclosure relates to an analysis method and a composite analysis apparatus.

### Description of the Background Art

Infrared spectroscopy is an analysis method of analyzing a component in a sample to be measured, by irradiating the sample with infrared rays and detecting transmitted light or reflected light. Infrared spectroscopy is performed with the use of an infrared spectrophotometer.

As described in Japanese Patent Laying-Open No. 2019-32214, infrared spectroscopic analysis is suitable for analysis of a polymeric material or an organic substance.

### SUMMARY OF THE INVENTION

Infrared spectroscopy, however, is not an optimal method for analysis of an inorganic substance such as metal. For example, laser-induced breakdown spectroscopy (LIBS) has been known as being suitable for analysis of an inorganic substance such as metal.

Therefore, a user has had to estimate a component in a sample to be analyzed and to consider basis of an analysis method performed in an analysis apparatus, which has been bothersome for the user.

The present disclosure was made to solve such a problem, and an object thereof is to provide a system capable of comprehensive analysis of substances ranging from an organic substance to an inorganic substance.

A first aspect of the present invention is an analysis method performed in a composite analysis apparatus in which infrared spectroscopic analysis by infrared spectroscopy and LIBS (laser-induced breakdown spectroscopic) analysis by laser-induced breakdown spectroscopy can be conducted on a sample. The analysis method includes conducting the infrared spectroscopic analysis by irradiating the sample with infrared rays, conducting the LIBS analysis by irradiating the sample with laser beams, and identifying a component in the sample based on first analysis data obtained by the infrared spectroscopic analysis and second analysis data obtained by the LIBS analysis. The conducting the infrared spectroscopic analysis is performed before the conducting the LIBS analysis.

Another aspect of the present invention is a composite analysis apparatus including a sample holder, an infrared light source, a detector, a laser light source, a spectroscope, and a control device. A sample is set on the sample holder. The infrared light source generates infrared rays to be emitted to the sample. The detector detects infrared rays that come from the sample as a result of irradiation with infrared rays. The laser light source generates laser beams to be emitted to the sample. The spectroscope separates emission lines generated at the sample as a result of irradiation with laser beams. The control device obtains first analysis data and second analysis data, the first analysis data being obtained by infrared spectroscopic analysis of infrared rays that come from the sample, the second analysis data being obtained by LIBS analysis of emission lines generated at the sample. The control device identifies a component in the sample based on the first analysis data and the second analysis data. The control device has the sample irradiated with infrared rays before the sample is irradiated with laser beams.

The foregoing and other objects, features, aspects and advantages of this invention will become more apparent from the following detailed description of this invention when taken in conjunction with the accompanying drawings.

### BRIEF DESCRIPTION OF THE DRAWINGS

Fig. 1 is a diagram showing a configuration of a composite analysis apparatus and a first optical path in infrared spectroscopic analysis according to an embodiment.
Fig. 2 is a diagram showing a second optical path in LIBS analysis.
Fig. 3 is a diagram showing a configuration of an analysis apparatus according to a first modification and the first optical path in infrared spectroscopic analysis.
Fig. 4 is a flowchart showing processing relating to an analysis method according to the embodiment.
Fig. 5 is a flowchart showing processing relating to an analysis method according to a second modification.

### DESCRIPTION OF THE PREFERRED EMBODIMENTS

An embodiment of the present invention will be described in detail below with reference to the drawings. The same or corresponding elements in the drawings have the same reference characters allotted and description thereof will not be repeated.

### [1. Configuration of Composite Analysis Apparatus According to Embodiment]

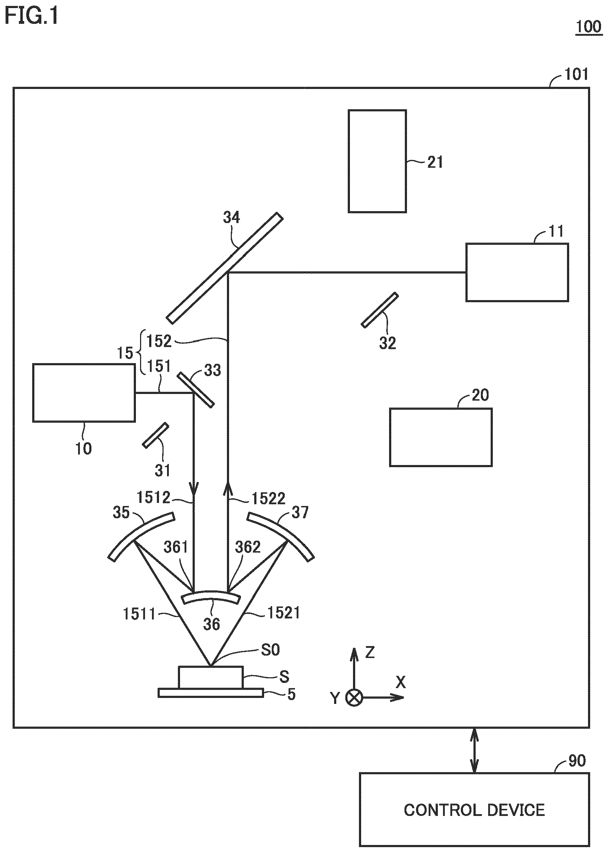

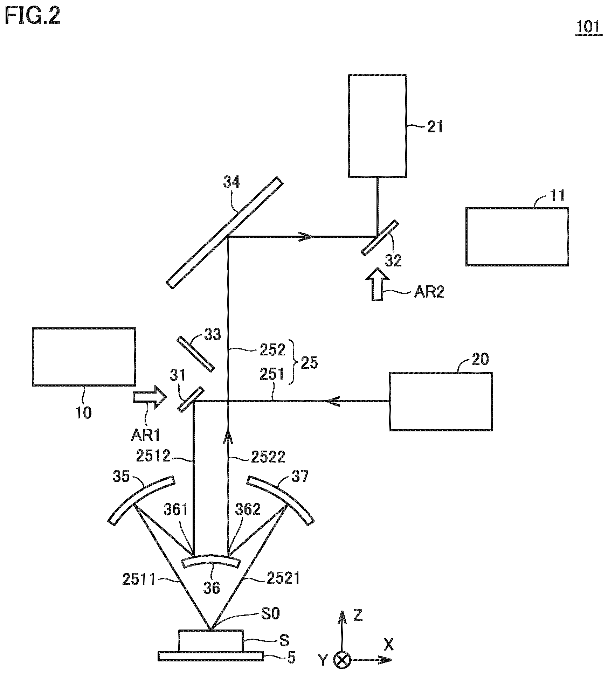

Fig. 1 is a diagram showing a configuration of a composite analysis apparatus 100 and a first optical path 15 in infrared spectroscopic analysis according to an embodiment. Fig. 2 is a diagram showing a second optical path 25 in LIBS analysis. The configuration of composite analysis apparatus 100, first optical path 15, and second optical path 25 will be described below with reference to Figs. 1 to 2.

Composite analysis apparatus 100 includes a control device 90 and an analysis apparatus 101.

Analysis apparatus 101 is an apparatus in which a sample S is analyzed. In analysis apparatus 101, infrared spectroscopic analysis by infrared spectroscopy and LIBS analysis by laser-induced breakdown spectroscopy can be conducted. In analysis apparatus 101, normally, LIBS analysis is conducted after infrared spectroscopic analysis.

Analysis apparatus 101 includes a sample holder 5, an infrared light source 10, a detector 11, a laser light source 20, a spectroscope 21, and a plurality of mirrors 31 to 37.

Sample S is set on sample holder 5. In one example, sample S is a solid sample. As will be described later, however, sample S may be a liquid sample or a gas sample accommodated in a container. In the example in Fig. 1, sample holder 5 is a sample stage. In one example, a direction perpendicular to the sample stage is defined as a Z axis and a plane in parallel to the sample stage is defined as an XY plane. In one example, the sample stage is used as being set such that the Z axis is substantially in parallel to a direction of gravity (a vertical direction). Sample S is carried on an upper surface of the sample stage. The sample stage is formed, for example, of a material (for example, metal) low in transmittance of infrared rays. Sample holder 5 should only be a mechanism that can fix a position of sample S being analyzed, and it may be, for example, a holding mechanism that holds sample S.

Infrared light source 10 generates infrared rays to be emitted to sample S. In one example, infrared light source 10 includes an interferometer (not shown) and a light source portion (not shown), and generates coherent infrared rays for spectral measurement. In one example, infrared rays generated from infrared light source 10 are incident on a specific position S0 in sample S. Specific position S0 is, for example, an analysis target position in sample S. In one example, specific position S0 is a position where LIBS analysis can be conducted, and more specifically a position on a surface of sample S or a position in the vicinity of the surface of sample S. Infrared rays emitted to sample S are, for example, infrared beams having a prescribed beam diameter and a prescribed power density. The beam diameter and the power density are set to achieve beam intensity sufficient for infrared spectroscopic analysis.

Detector 11 is a photodetector that detects infrared rays that come from sample S as a result of irradiation with infrared rays. A light reception signal from detector 11 is transmitted to control device 90.

Laser light source 20 generates laser beams to be emitted to sample S. In one example, laser light source 20 includes a laser oscillator (not shown) and a condenser lens (not shown). Laser pulses emitted from the laser oscillator are condensed by the condenser lens and sample S is irradiated therewith. In one example, infrared rays generated from laser light source 20 are incident on specific position S0 in sample S. Laser beams emitted to sample S are set, for example, to have a prescribed beam diameter and a prescribed power density. The beam diameter and the power density are set to achieve beam intensity sufficient for LIBS analysis.

Spectroscope 21 is an ultraviolet and visible light spectroscope that separates emission lines generated at sample S as a result of irradiation with laser beams. Emission lines are atomic lines and/or ion lines generated at the time when a sample component is microparticulated and excited (converted to plasma) at a sample surface and/or around the sample surface by irradiation with laser beams. A signal indicating a result of separation of emission lines by spectroscope 21 is transmitted to control device 90.

The plurality of mirrors 31 to 37 can be arranged at a first position shown in Fig. 1 or a second position shown in Fig. 2. In the example in Figs. 1 to 2, the first position and the second position are different in positions of mirrors 31 and 32 shown with respective arrows AR1 and AR2. Mirrors 31 and 32 are movable mirrors configured to be variable in position by a mirror drive mechanism (not shown). The mirror drive mechanism can move a location of each of mirrors 31 and 32 from the position (first position) in Fig. 1 to the position (second position) in Fig. 2 or from the position (second position) in Fig. 2 to the position (first position) in Fig. 1. An exemplary mirror drive mechanism is a rail over which mirrors 31 and 32 are slid, without being limited thereto.

Mirrors 33 to 37 are fixed mirrors positions of which are fixed. Mirrors 35 to 37 are paraboloid mirrors arranged at positions that allow later-described focusing on specific position S0. Each of mirrors 31, 32, 33, and 34, on the other hand, is arranged at a position for incidence of light on the paraboloid mirror or a position where it directs light from the paraboloid mirror to detector 11 or spectroscope 21.

When the plurality of mirrors 31 to 37 are set to the first position, first optical path 15 is formed. First optical path 15 includes an optical path 151 and an optical path 152. In optical path 151, infrared rays generated from infrared light source 10 are sequentially reflected by mirrors 33, 36, and 35 and thereafter incident on specific position S0 in sample S. In optical path 152, infrared rays that come from specific position S0 are sequentially reflected by mirrors 37, 36, and 34 and thereafter incident on detector 11.

When the plurality of mirrors 31 to 37 are set to the second position, second optical path 25 is formed. Second optical path 25 includes an optical path 251 and an optical path 252. In optical path 251, laser beams generated from laser light source 20 are sequentially reflected by mirrors 31, 36, and 35 and thereafter incident on specific position S0. In optical path 252, emission lines generated from specific position S0 are sequentially reflected by mirrors 37, 36, 34, and 32 and thereafter incident on spectroscope 21.

More specifically, the first position of the plurality of mirrors 31 to 37 is preferably set such that, in infrared spectroscopic analysis, an intersection (what is called a focus) of a center of incident infrared rays 1511 and a center of outgoing infrared rays 1521 is located at specific position S0 in sample S.

The second position of the plurality of mirrors 31 to 37 is preferably set such that, in LIBS analysis, an intersection (what is called a focus) of a center of incident laser beams 2511 and a center of outgoing emission lines 2521 is located at specific position S0 in sample S.

The examples in Figs. 1 to 2 are configured such that, when light is incident on a position 361 in mirror 36 at a prescribed first angle, specific position S0 in the sample is focused on and light comes from a position 362 in mirror 36 at a prescribed second angle. In addition, when the plurality of mirrors are arranged at the first position, mirror 33 is set such that infrared rays 1512 are incident on position 361 in mirror 36 at the first angle and mirror 34 is set such that infrared rays 1522 that come from position 362 in mirror 36 are incident on detector 11. When the plurality of mirrors are arranged at the second position, mirror 31 is set such that laser beams 2512 are incident on position 361 in mirror 36 at the first angle and mirrors 34 and 32 are set such that emission lines 2522 that come from position 362 in mirror 36 are incident on spectroscope 21.

As set forth above, analysis apparatus 101 can conduct analysis at the same position (specific position S0) in sample S in infrared spectroscopic analysis and LIBS analysis by such a simplified configuration and control as switching the optical path by moving two mirrors.

Control device 90 can be implemented by a personal computer or a microcomputer including a central processing unit (CPU) and a memory that are not shown.

Control device 90 controls analysis apparatus 101. Control device 90 controls infrared light source 10 and detector 11 to conduct infrared spectroscopic analysis. Control device 90 controls laser light source 20 and spectroscope 21 to conduct LIBS analysis. In infrared spectroscopic analysis, control device 90 controls a mirror driver to arrange the plurality of mirrors 31 to 37 at the first position. In LIBS analysis, control device 90 controls the mirror driver to arrange the plurality of mirrors 31 to 37 at the second position. Mirrors 31 and 32 may be configured to manually be moved by the user. For accurate analysis by movement of mirrors 31 and 32 to exact positions, however, control device 90 preferably controls the positions of mirrors 31 and 32.

Control device 90 conducts infrared spectroscopy by irradiation of sample S with infrared rays before LIB S analysis by irradiation of sample S with laser beams. A component in sample S before it is denatured by LIBS analysis can thus be subjected to infrared spectroscopic analysis. Therefore, the same position (specific position S0) in sample S can accurately be subjected to both of infrared spectroscopic analysis and LIBS analysis.

Control device 90 further performs processing for identifying a component in sample S based on a signal received from detector 11 in infrared spectroscopic analysis and a signal received from spectroscope 21 in LIBS analysis.

Specifically, control device 90 initially obtains first analysis data obtained by infrared spectroscopic analysis of infrared rays that come from sample S and second analysis data obtained by LIBS analysis of emission lines generated at sample S. The first analysis data is, for example, infrared spectra. The second analysis data is, for example, emission line spectra.

In one example, control device 90 creates infrared spectra by performing processing such as Fourier transform on a light reception signal received from detector 11. In addition, control device 90 creates emission line spectra based on a signal received from spectroscope 21 and indicating a result of separation of emission lines. The infrared spectra and the emission line spectra may be created by detector 11 and spectroscope 21, respectively, and thereafter transmitted to control device 90.

Furthermore, control device 90 identifies the component in sample S based on the first analysis data and the second analysis data. Specifically, for example, control device 90 identifies the component at specific position S0 based on a peak wavelength of the infrared spectra and quantifies the component in accordance with intensity of the peak wavelength. For example, control device 90 identifies the component at specific position S0 based on the peak wavelength of the emission line spectra and quantifies the component in accordance with intensity of the peak wavelength.

Composite analysis apparatus 100 described above can conduct both of infrared spectroscopic analysis and LIBS analysis on sample S. Therefore, in an example where a component in sample S to be analyzed is an organic substance, the component can accurately be identified based on the first analysis data obtained by infrared spectroscopic analysis. In an example where a component in sample S to be analyzed is an inorganic substance, on the other hand, the component can accurately be identified based on the second analysis data obtained by LIBS analysis. Therefore, composite analysis apparatus 100 can accurately identify the component regardless of whether the component in sample S to be analyzed is an organic substance or an inorganic substance. The user can thus save time and efforts for estimating the component in sample S to be analyzed and considering whether to subject the sample to analysis in an analysis apparatus suitable for the organic substance or an analysis apparatus suitable for the inorganic substance before the user starts analysis of sample S. In addition, as compared with an example where the user conducts infrared spectroscopic analysis in an infrared spectroscopic analysis apparatus and thereafter moves the sample to an LIBS analysis apparatus to conduct LIBS analysis when the user is unable to estimate the component in the sample to be analyzed, time and efforts for moving the sample can also be saved. Furthermore, possibility of such inappropriate analysis as conducting LIBS analysis first and then conducting infrared spectroscopic analysis of a denatured sample can also be eliminated. As set forth above, according to composite analysis apparatus 100, a system capable of comprehensive analysis of substances ranging from an organic substance to an inorganic substance can be provided.

In particular, composite analysis apparatus 100 is highly convenient in that infrared spectroscopic analysis and LIBS analysis at the same position (specific position S0) in sample S are readily conducted. For example, infrared spectroscopic analysis and LIBS analysis are often used for identification of a component in a small foreign matter in a product. A maximum dimension of the foreign matter may be, for example, not larger than 100 µm or may be 10µm-square in a more specific example, although a size thereof is not limited as such. Focusing on such a small foreign matter for infrared spectroscopic analysis and thereafter focusing again on exactly the same position for LIBS analysis is a difficult task for the user. The user may erroneously focus on a foreign matter different from the foreign matter subjected to infrared spectroscopic analysis. In composite analysis apparatus 100, however, after infrared spectroscopic analysis, positions of mirrors 31 and 32 can be moved for LIBS spectroscopic analysis at the same position as in infrared spectroscopic analysis. Therefore, time and efforts for the user to set focusing again can be saved. In addition, infrared ray analysis and LIBS analysis can be conducted on exactly the same position.

An example of analysis of the solid sample in composite analysis apparatus 100 is mainly described above. Composite analysis apparatus 100 can also similarly analyze a liquid sample or a gas sample. For example, in LIBS analysis, fast analysis of a sample containing any of gas, liquid, and solid can be conducted without a complicated pre-processing step. In particular, plasma at a high temperature (for example, 15000 K to 30000 K) is generated by laser beams, and hence not only a metal element but also halogen or the like which is difficult to be detected in other emission spectroscopic analysis can be measured of the order of 1 ppm. In other words, composite analysis apparatus 100 can conduct highly accurate LIBS analysis in a short period of time on all of gas, liquid, and solid.

Composite analysis apparatus 100 can conduct infrared spectroscopic analysis suitable for an organic substance for which LIBS analysis is not suitable, before the organic substance is denatured by LIBS analysis.

Therefore, by using composite analysis apparatus 100, the user can accurately identify the component contained in the sample without considering whether the component in the sample is the organic substance or the inorganic substance.

Since single composite analysis apparatus 100 is able to conduct both of infrared spectroscopic analysis and LIBS analysis, a footprint of the apparatus can be smaller than in an example where two apparatuses which are an infrared spectrophotometer specialized in infrared spectroscopic analysis and a laser-induced breakdown spectroscopic analysis apparatus specialized in LIBS analysis are provided. Furthermore, composite analysis apparatuses 100 can be lower in component cost than in an example where two independent apparatuses are manufactured, in that a component (for example, the control device) necessary in both of infrared spectroscopic analysis and LIBS analysis can be shared.

### [2. Configuration of Analysis Apparatus According to First Modification]

Though analysis apparatus 101 according to the embodiment described above is configured to subject reflected light from sample S to infrared spectroscopic analysis, an analysis apparatus 101A according to a first modification is configured to subject transmitted light from sample S to infrared spectroscopic analysis.

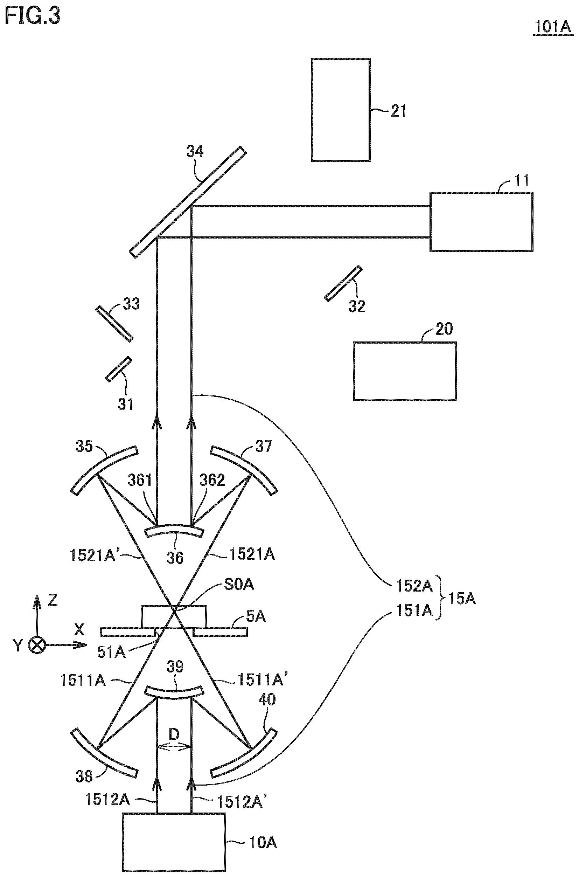

Fig. 3 is a diagram showing the configuration of analysis apparatus 101A according to the first modification and the first optical path in infrared spectroscopic analysis.

Referring to Fig. 3, analysis apparatus 101A according to the first modification is different from analysis apparatus 101 in position of an infrared light source 10A and structure of a sample holder 5A. Analysis apparatus 101A additionally includes mirrors 38 to 40. With structural change above, a first optical path 15A in infrared analysis by analysis apparatus 101A is different from first optical path 15 in analysis apparatus 101.

Sample holder 5A is configured to obtain transmitted light of infrared rays from sample S provided on sample holder 5A. In the example in Fig. 3, sample holder 5A is a sample stage where a through hole 51A is provided. With sample holder 5A, infrared rays 1511A and 1511A' that have passed through through hole 51A from prescribed directions (from below in Fig. 3) can be incident on sample S. Infrared rays 1521A and 1521A' that have passed through sample S are directed toward a side (upward in Fig. 3) opposite to the prescribed directions.

Mirrors 38 to 40 are paraboloid mirrors positions of which are fixed.

Infrared light source 10A is arranged on a side opposite (below in Fig. 3) to sample holder 5A, with respect to mirrors 38 to 40.

In one example, infrared light source 10A and mirrors 38 to 40 are arranged such that an intersection (which is also called a "focus") of incident light rays is formed at a specific position S0A in sample S. Specific position S0A is, for example, a position on the surface of sample S or in the vicinity of the surface where LIBS analysis can be conducted. More specific description will be given below with reference to Fig. 3. Infrared rays 1512A and 1512A' are emitted from infrared light source 10A and reflected by mirrors 39 and 38 and mirrors 39 and 40 to become infrared rays 1511A and 1511A', respectively. Infrared rays 1511A and 1511A' are set to form the intersection at specific position S0A. Infrared rays 1512A and 1512A' emitted from infrared light source 10A are, for example, infrared beams having a prescribed beam diameter and a prescribed power density. The beam diameter and the power density are set to achieve beam intensity sufficient for analysis.

Transmitted light (infrared rays 1521A and 1521A') that have passed through specific position S0A are reflected by mirrors 37, 36, and 34 and mirrors 35, 36, and 34, respectively, and thereafter incident on detector 11.

Infrared rays emitted from infrared light source 10A may be, for example, a single infrared beam having a diameter D. In this case, the beam is reflected by mirror 39 as being laterally split. Two split beams are then reflected by mirrors 38 and 40, respectively, and thereafter form the intersection at specific position S0A. Transmitted light of infrared rays that have passed through specific position S0A are then reflected by mirrors 37, 36, and 34 and mirrors 35, 36, and 34, respectively, and thereafter incident on detector 11.

As set forth above, with analysis apparatus 101A according to the first modification, transmitted light of infrared rays can be subjected to infrared spectroscopic analysis. LIBS analysis can be conducted also in analysis apparatus 101A by moving the positions of mirrors 31 and 32 to the positions in Fig. 2. Therefore, similarly to analysis apparatus 101 according to the embodiment, according to analysis apparatus 101A according to the first modification, a system capable of comprehensive analysis of substances ranging from an organic substance to an inorganic substance can be provided.

In particular, analysis apparatus 101A according to the first modification is suitable for analysis of sample S high in transmittance of infrared rays, and it can accurately analyze sample S high in transmittance of infrared rays. Analysis apparatus 101 according to the embodiment, on the other hand, is suitable for analysis of sample S high in reflectance of infrared rays, and it can accurately analyze sample S high in reflectance of infrared rays.

Analysis apparatus 101A according to the first modification is advantageous in that the diameter of infrared rays emitted to sample S is readily increased. Since emission lines generated from a component near the sample surface are detected in LIBS analysis, a configuration in which laser light source 20 and spectroscope 21 are provided on the same side (above in Fig. 2) with respect to the XY plane that passes through specific position S0 in sample S is simple and preferred (see Fig. 2). For infrared spectroscopic analysis of reflected light of infrared rays at specific position S0 the same as in LIBS, a configuration in which infrared light source 10 and detector 11 are also provided on the side (above in Fig. 1) the same as the side where laser light source 20 and spectroscope 21 are provided (see Fig. 1). For detection and infrared spectroscopic analysis of transmitted light of infrared rays, on the other hand, a configuration in which infrared light source 10 is provided on the side (below in Fig. 3) opposite to detector 11, laser light source 20, and spectroscope 21 is simple and preferred (see Fig. 3). Thus, in analysis apparatus 101A, unlike analysis apparatus 101, a component (for example, mirrors 31 and 33) other than mirrors 38 to 40 for focusing on specific position S0A does not have to be arranged in a space between infrared light source 10A and sample S. Therefore, analysis apparatus 101A is readily configured such that infrared rays large in diameter are incident on sample S. An amount of infrared rays emitted to sample S and detected by detector 11 can thus be increased and hence accuracy in analysis can be improved.

Analysis apparatus 101 according to the embodiment, on the other hand, is advantageous in that cost for components can be reduced, because a component (for example, mirrors 35 to 36) necessary for LIBS analysis and/or detection of infrared rays can also serve as a component necessary for incidence of infrared rays on sample S.

### [3. Processing Relating to Analysis Method According to Embodiment]

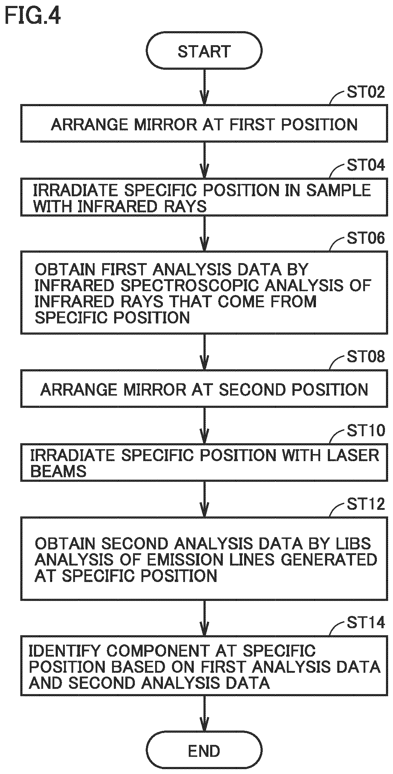

Fig. 4 is a flowchart showing processing relating to an analysis method according to the embodiment. Processing in Fig. 4 is performed by control device 90 in one example.

In steps (which will be denoted as "ST" below) 02 to ST06, control device 90 has sample S irradiated with infrared rays to conduct infrared spectroscopic analysis.

In ST02, control device 90 controls a mirror drive mechanism (not shown) to arrange the plurality of mirrors 31 to 37 at the first position shown in Fig. 1.

In ST04, control device 90 has specific position S0 in sample S irradiated with infrared rays generated from infrared light source 10. In one example, control device 90 initially controls infrared light source 10 to generate infrared rays. Infrared rays generated from infrared light source 10 pass through first optical path 15 formed by the mirrors arranged at the first position. More specifically, infrared rays generated from infrared light source 10 are sequentially reflected by mirrors 33, 36, and 35 and incident on specific position S0 in sample S. Infrared rays that come from specific position S0 are then sequentially reflected by mirrors 37, 36, and 34 and incident on detector 11. Specific position S0 is a position to be analyzed. In one example, specific position S0 corresponds to a small foreign matter in a product found by observation with a naked eye or a microscope by the user.

In ST06, control device 90 subjects infrared rays that come from specific position S0 to infrared spectroscopic analysis to obtain the first analysis data. The first analysis data is, for example, infrared spectra.

In ST08 to ST12, control device 90 has sample S irradiated with laser beams to conduct LIBS analysis.

In ST08, control device 90 controls the mirror drive mechanism (not shown) to arrange the plurality of mirrors at the second position different from the first position.

In ST10, control device 90 has specific position S0 irradiated with laser beams generated from laser light source 20. In one example, control device 90 initially controls laser light source 20 to generate laser beams. Laser beams generated from laser light source 20 pass through second optical path 25 formed by the mirrors arranged at the second position. More specifically, laser beams generated from laser light source 20 are sequentially reflected by mirrors 31, 36, and 35 and incident on specific position S0 in sample S. Emission lines emitted from specific position S0 are then sequentially reflected by mirrors 37, 36, 34, and 32 and incident on spectroscope 21.

In ST12, control device 90 obtains the second analysis data obtained by LIBS analysis of emission lines generated at specific position S0. The second analysis data is, for example, emission line spectra.

In ST14, control device 90 identifies the component at specific position S0 based on the first analysis data obtained by infrared spectroscopic analysis and the second analysis data obtained by LIBS analysis. For example, a component in a foreign matter in a product can thus be identified. For example, an organic component corresponding to a peak of the infrared spectra can accurately be identified based on the peak. On the other hand, an inorganic component corresponding to a peak of the emission line spectra can accurately be identified based on the peak.

As set forth above, in the processing in Fig. 4, infrared spectroscopic analysis is conducted prior to LIBS analysis. Therefore, a component before it is denatured by LIBS analysis can be subjected to infrared spectroscopic analysis. Thus, even when a component to be analyzed is an organic substance or an inorganic substance or contains both of the organic substance and the inorganic substance, the component can readily accurately be identified. Therefore, a system capable of comprehensive analysis of substances ranging from the organic substance to the inorganic substance can be provided.

Though processing by control device 90 to conduct infrared spectroscopic analysis of reflected light that comes from sample S in ST02 to ST06 in Fig. 4 is described, the processing may be replaced with processing by control device 90 to conduct infrared spectroscopic analysis of transmitted light that comes from sample S.

### [4. Processing Relating to Analysis Method According to Second Modification]

An analysis method according to a second modification includes processing for determining, when control device 90 has information on a component to be analyzed, whether to conduct one or both of infrared spectroscopic analysis and LIBS analysis based on the information.

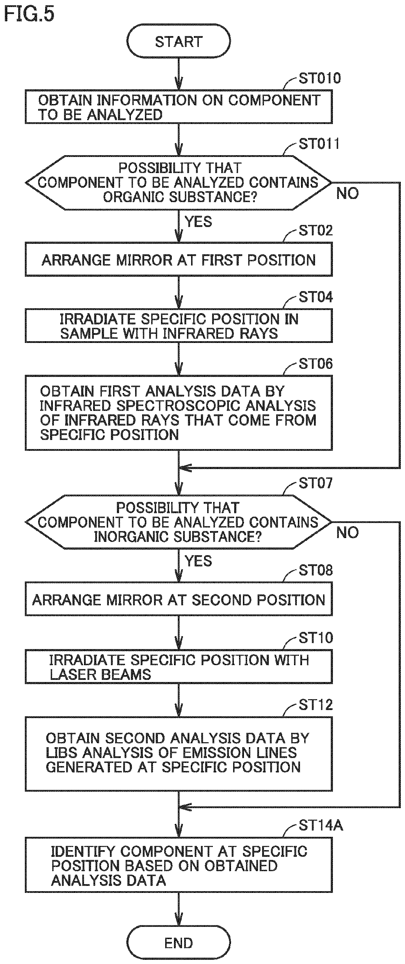

Fig. 5 is a flowchart showing processing relating to the analysis method according to the second modification. The processing in Fig. 5 is performed by control device 90 in one example.

In ST010, control device 90 obtains information on a component to be analyzed. The information on the component to be analyzed is, for example, a substance name to be a candidate for the component to be analyzed. For example, the user inputs the information on the component to be analyzed by operating an input device (not shown) of control device 90, and control device 90 obtains the information inputted through the input device.

In ST011, control device 90 determines based on the inputted information, whether or not there is possibility that the component to be analyzed contains an organic substance. Specifically, for example, control device 90 determines whether or not substance names to be candidates for the component to be analyzed include a substance name corresponding to the organic substance. The substance name corresponding to the organic substance is a substance name indicating that the substance is the organic substance, and it is, for example, a name of an organic substance.

When there is possibility that the component to be analyzed contains the organic substance (YES in ST011), control device 90 has the process proceed to ST02. Processing in ST02 to ST06 in Fig. 5 is the same as the processing in ST02 to 06 in Fig. 4.

Following the processing in ST06 or when there is no possibility that the component to be analyzed contains the organic substance (NO in ST011), in ST07, control device 90 determines based on the inputted information, whether or not there is possibility that the component to be analyzed contains an inorganic substance. Specifically, for example, control device 90 determines whether or not the substance names to be the candidates for the component to be analyzed include a substance name corresponding to an inorganic substance. The substance name corresponding to the inorganic substance is a substance name indicating that the substance is an inorganic substance, and it is, for example, a name of an inorganic substance.

When there is possibility that the component to be analyzed contains the inorganic substance (YES in ST07), control device 90 has the process proceed to ST08. Processing in ST08 to ST12 in Fig. 5 is the same as the processing in ST08 to 12 in Fig. 4.

Following the processing in ST12 or when there is no possibility that the component to be analyzed contains the inorganic substance (NO in ST07), in ST14A, control device 90 identifies the component at specific position S0 based on the analysis data obtained in ST06 and/or ST12.

As set forth above, the processing in Fig. 5 includes steps ST010, ST011, and ST07 of determining whether or not to perform one or both of conducting infrared spectroscopic analysis ST02 to ST06 and conducting LIBS analysis ST08 to ST12, based on the information on the component in the sample to be analyzed. The user can thus reduce a time period for obviously unnecessary analysis. Therefore, further higher efficiency in analysis can be expected in a system capable of comprehensive analysis of substances ranging from the organic substance to the inorganic substance.

The configuration may be such that, when the user does not input the substance name to be the candidate for the component to be analyzed in ST010, it is determined that the component to be analyzed may contain both of the organic substance and the inorganic substance and infrared spectroscopic analysis and LIBS spectroscopic analysis are conducted.

The user may more directly input information on whether or not the component to be analyzed may contain the organic substance or the inorganic substance. Similarly, the user may input an instruction as to whether or not to conduct infrared spectroscopic analysis and whether or not to conduct LIBS analysis. Furthermore, when the component to be analyzed has been set for each type of the sample, the user may input the type of the sample.

### [Aspects]

Illustrative embodiments described above are understood by a person skilled in the art as specific examples of aspects below.

(Clause 1) An analysis method according to one aspect is an analysis method performed in a composite analysis apparatus in which infrared spectroscopic analysis by infrared spectroscopy and LIBS (laser-induced breakdown spectroscopic) analysis by laser-induced breakdown spectroscopy can be conducted on a sample. The analysis method includes conducting the infrared spectroscopic analysis by irradiating the sample with infrared rays, conducting the LIBS analysis by irradiating the sample with laser beams, and identifying a component in the sample based on first analysis data obtained by the infrared spectroscopic analysis and second analysis data obtained by the LIBS analysis. The conducting the infrared spectroscopic analysis is performed before the conducting the LIBS analysis.

According to the analysis method described in Clause 1, infrared spectroscopic analysis is conducted prior to LIBS analysis. Therefore, a component before it is denatured by LIBS analysis can be subjected to infrared spectroscopic analysis. Thus, even when a component to be analyzed is an organic substance or an inorganic substance or contains both of the organic substance and the inorganic substance, the component can readily accurately be identified. Therefore, a system capable of comprehensive analysis of substances ranging from the organic substance to the inorganic substance can be provided.

(Clause 2) In the analysis method described in Clause 1, the conducting the infrared spectroscopic analysis includes irradiating a specific position in the sample with infrared rays generated from an infrared light source. The conducting the LIBS analysis includes irradiating the specific position with laser beams generated from a laser light source.

According to the analysis method described in Clause 2, the same position (specific position) in the sample can readily be analyzed in infrared spectroscopic analysis and LIBS analysis.

(Clause 3) In the analysis method described in Clause 2, the composite analysis apparatus further includes a plurality of mirrors. The conducting the infrared spectroscopic analysis further includes arranging the plurality of mirrors at a first position. The conducting the LIBS analysis further includes arranging the plurality of mirrors at a second position different from the first position. When the plurality of mirrors are arranged at the first position, a first optical path is formed. In the first optical path, infrared rays generated from the infrared light source are incident on the specific position and infrared rays that come from the specific position are incident on a detector. When the plurality of mirrors are arranged at the second position, a second optical path is formed. In the second optical path, laser beams generated from the laser light source are incident on the specific position and emission lines generated at the specific position are incident on a spectroscope.

According to the analysis method described in Clause 3, the same position (specific position) in the sample can be analyzed in infrared spectroscopic analysis and LIBS analysis by such a simplified configuration and control as switching the optical path by moving the mirrors.

(Clause 4) In the analysis method described in any one of Clauses 1 to 3, the conducting the infrared spectroscopic analysis includes conducting infrared spectroscopic analysis of reflected light from the sample or conducting infrared spectroscopic analysis of transmitted light from the sample.

When the analysis method described in Clause 4 includes the conducting infrared spectroscopic analysis of reflected light, a sample high in reflectance of infrared rays can accurately be analyzed. In addition, cost for components can be reduced in that a component necessary for LIBS analysis and/or detection of infrared rays can also serve as a component necessary for incidence of infrared rays on the sample. When the analysis method described in Clause 4 includes the conducting infrared spectroscopic analysis of transmitted light, on the other hand, a sample high in transmittance of infrared rays can accurately be analyzed. In addition, a diameter of infrared rays to be emitted to the sample is readily increased.

(Clause 5) The analysis method described in any one of Clauses 1 to 4 further includes determining whether to perform one or both of the conducting the infrared spectroscopic analysis and the conducting the LIBS analysis based on information on a component in the sample to be analyzed.

According to the analysis method described in Clause 5, further higher efficiency in analysis can be expected in the system capable of comprehensive analysis of substances ranging from the organic substance to the inorganic substance.

(Clause 6) A composite analysis apparatus according to another aspect includes a sample holder, an infrared light source, a detector, a laser light source, a spectroscope, and a control device. A sample is set on the sample holder. The infrared light source generates infrared rays to be emitted to the sample. The detector detects infrared rays that come from the sample as a result of irradiation with infrared rays. The laser light source generates laser beams to be emitted to the sample. The spectroscope separates emission lines generated at the sample as a result of irradiation with laser beams. The control device obtains first analysis data and second analysis data, the first analysis data being obtained by infrared spectroscopic analysis of infrared rays that come from the sample, the second analysis data being obtained by LIBS analysis of emission lines generated at the sample. The control device identifies a component in the sample based on the first analysis data and the second analysis data. The control device has the sample irradiated with infrared rays before the sample is irradiated with laser beams.

According to the composite analysis apparatus described in Clause 6, in an example where the component in the sample to be analyzed is an organic substance, the component can accurately be identified based on the first analysis data obtained by infrared spectroscopic analysis. In an example where the component in the sample to be analyzed is an inorganic substance, on the other hand, the component can accurately be identified based on the second analysis data obtained by LIBS analysis. The user can thus save time and efforts for estimating the component in the sample to be analyzed and considering whether to subject the sample to an analysis apparatus suitable for the organic substance or an analysis apparatus suitable for the inorganic substance before the user starts analysis of the sample. Furthermore, possibility of such inappropriate analysis as conducting LIBS analysis first and then conducting infrared spectroscopic analysis of a denatured sample can also be eliminated. As set forth above, a system capable of comprehensive analysis of substances ranging from the organic substance to the inorganic substance can be provided.

(Clause 7) The composite analysis apparatus according to Clause 6 further includes a plurality of mirrors. The plurality of mirrors can be arranged at a first position or a second position. When the plurality of mirrors are arranged at the first position, a first optical path is formed. In the first optical path, infrared rays generated from the infrared light source are incident on a specific position and infrared rays that come from the specific position are incident on the detector. When the plurality of mirrors are arranged at the second position, a second optical path is formed. In the second optical path, laser beams generated from the laser light source are incident on the specific position and emission lines generated at the specific position are incident on the spectroscope.

According to the composite analysis apparatus described in Clause 7, after infrared spectroscopic analysis, the position of the mirrors can be moved for LIBS analysis at the same position as in infrared spectroscopic analysis. Therefore, time and efforts for the user to set focusing again can be saved. Infrared ray analysis and LIBS analysis can be conducted on exactly the same position.

Though embodiments of the present invention have been described, it should be understood that the embodiments disclosed herein are illustrative and non-restrictive in every respect. The scope of the present invention is defined by the terms of the claims and is intended to include any modifications within the scope and meaning equivalent to the terms of the claims.

## Claims

1. An analysis method performed in a composite analysis apparatus (101, 101A) in which infrared spectroscopic analysis by infrared spectroscopy and LIBS (laser-induced breakdown spectroscopic) analysis by laser-induced breakdown spectroscopy can be conducted on a sample (S), the analysis method comprising:
conducting the infrared spectroscopic analysis by irradiating the sample (S) with infrared rays (ST02 to ST06);
conducting the LIBS analysis by irradiating the sample (S) with laser beams (ST08 to ST12); and
identifying a component in the sample (S) based on first analysis data obtained by the infrared spectroscopic analysis and second analysis data obtained by the LIBS analysis (ST14), wherein
the conducting the infrared spectroscopic analysis (ST02 to ST06) is performed before the conducting the LIBS analysis (ST08 to ST12).

2. The analysis method according to claim 1, wherein
the conducting the infrared spectroscopic analysis (ST02 to ST06) includes irradiating a specific position (S0) in the sample (S) with infrared rays generated from an infrared light source (10) (ST04), and
the conducting the LIBS analysis (ST08 to ST12) includes irradiating the specific position (S0) with laser beams generated from a laser light source (20) (ST10).

3. The analysis method according to claim 2, wherein
the composite analysis apparatus (100) further includes a plurality of mirrors (31 to 37),
the conducting the infrared spectroscopic analysis (ST02 to ST06) further includes arranging the plurality of mirrors (31 to 37) at a first position (ST02),
the conducting the LIBS analysis (ST08 to ST12) further includes arranging the plurality of mirrors (31 to 37) at a second position different from the first position (ST08),
when the plurality of mirrors (31 to 37) are arranged at the first position, a first optical path (15) is formed,
in the first optical path (15), infrared rays generated from the infrared light source (10) are incident on the specific position (S0) and infrared rays that come from the specific position (S0) are incident on a detector (11),
when the plurality of mirrors (31 to 37) are arranged at the second position, a second optical path (25) is formed, and
in the second optical path (25), laser beams generated from the laser light source (20) are incident on the specific position (S0) and emission lines generated at the specific position (S0) are incident on a spectroscope (21).

4. The analysis method according to any one of claims 1 to 3, wherein
the conducting the infrared spectroscopic analysis (ST02 to ST06) includes conducting infrared spectroscopic analysis of reflected light from the sample (S) or conducting infrared spectroscopic analysis of transmitted light from the sample (S).

5. The analysis method according to any one of claims 1 to 3, further comprising determining whether to perform one or both of the conducting the infrared spectroscopic analysis (ST02 to ST06) and the conducting the LIBS analysis (ST08 to ST12) based on information on a component in the sample (S) to be analyzed (ST010, ST011, ST07).

6. A composite analysis apparatus (100) comprising:
a sample holder (5) on which a sample (S) is set;
an infrared light source (10) that generates infrared rays to be emitted to the sample (S);
a detector (11) that detects infrared rays that come from the sample (S) as a result of irradiation with infrared rays;
a laser light source (20) that generates laser beams to be emitted to the sample (S);
a spectroscope (21) that separates emission lines generated at the sample (S) as a result of irradiation with laser beams; and
a control device (90), wherein
the control device (90)
obtains first analysis data and second analysis data, the first analysis data being obtained by infrared spectroscopic analysis of infrared rays that come from the sample (S), the second analysis data being obtained by LIBS analysis of emission lines generated at the sample (S), and
identifies a component in the sample (S) based on the first analysis data and the second analysis data, and
the control device (90) has the sample (S) irradiated with infrared rays before the sample (S) is irradiated with laser beams.

7. The composite analysis apparatus (100) according to claim 6, further comprising a plurality of mirrors (31 to 37), wherein
the plurality of mirrors (31 to 37) can be arranged at a first position or a second position,
when the plurality of mirrors (31 to 37) are arranged at the first position, a first optical path (15) is formed,
in the first optical path (15), infrared rays generated from the infrared light source (10) are incident on a specific position (S0) and infrared rays that come from the specific position (S0) are incident on the detector,
when the plurality of mirrors (31 to 37) are arranged at the second position, a second optical path (25) is formed, and
in the second optical path (25), laser beams generated from the laser light source (20) are incident on the specific position (S0) and emission lines generated at the specific position (S0) are incident on the spectroscope (21).
